# EUROPEAN PATENT SPECIFICATION

(11) **EP 2 226 402 B1**
(45) Date of publication and mention of the grant of the patent: **13.05.2015**
(21) Application number: 08865163.3
(22) Date of filing: 19.12.2008
(51) Int. Cl.: C22B 21/06, C22B 9/02

(54) **METHOD OF PURIFYING SUBSTANCE AND APPARATUS FOR PURIFYING SUBSTANCE**
VERFAHREN ZUR REINIGUNG EINER SUBSTANZ UND VORRICHTUNG ZUR REINIGUNG EINER SUBSTANZ
PROCÉDÉ DE PURIFICATION D'UNE SUBSTANCE ET APPAREIL DE PURIFICATION D'UNE SUBSTANCE

(30) Priority: 20.12.2007 JP 2007328913
(43) Date of publication of application: 08.09.2010
(73) Proprietor: SHOWA DENKO K.K., Tokyo 105-8518 (JP)
(72) Inventor: YOSHIDA, Katuoki, Sakai-shi Osaka 590-8576 (JP); HAGIWARA, Yasuhisa, Oyama-shi Tochigi 323-8678 (JP); MIYATE, Yukihiro, Oyama-shi Tochigi 323-8678 (JP); MURAOKA, Akifumi, Oyama-shi Tochigi 323-8678 (JP); HOSONO, Uremu, Oyama-shi Tochigi 323-8678 (JP)
(74) Representative: Viering, Jentschura & Partner Patent- und Rechtsanwälte
(86) International application number: PCT/JP2008/073253
(87) International publication number: WO 2009/081886

(56) References cited:
- JP-A- 9 188 512
- JP-A- 11 100 620
- JP-A- 11 172 345
- JP-A- 11 172 345
- JP-A- 58 048 646
- JP-A- 2001 226 721
- JP-A- 2008 163 419

## Description

### TECHNICAL FIELD

The present invention relates to a method and an apparatus for purifying a substance, such as, e.g., metal, and more specifically, to a method and an apparatus for purifying a substance containing eutectic impurities to obtain a high-purity substance by decreasing a content rate of eutectic impurities than the original substance utilizing the principal of a segregation/solidification method.

### TECHNICAL BACKGROUND

JP 2001226721 A discloses a method for refining Al, JP 11 100620 A discloses an apparatus for refining metal, JP 11 172345 A discloses a method for refining Al, and JP 58 048646 A discloses a purifying method for Al.

In cases where impurities, such as, e.g., Fe, Si, or Cu, which create eutectic crystals with aluminum, are contained in aluminum, in order to obtain high-purity aluminum by eliminating these impurities, it is effective to selectively remove the primary crystal aluminum created at the time of solidifying molten aluminum by cooling it, and this principle is well-known.

Conventionally, various aluminum purification methods utilizing the aforementioned principle have been proposed. For example, Patent Document 1 proposes that a cooled object is rotated so that a relative speed between the outer peripheral portion of the cooled object and the molten aluminum is set to 1,600 mm/s to 8,000 mm/s to reduce the thickness of the impurity concentration layer formed at the vicinity of the solidification boundary face to thereby increase the purity of the purified aluminum.

Furthermore, Patent Document 2 proposes a means for effectively removing an impurity concentration layer created at the solidification boundary face by rotating molten aluminum so that the centrifugal acceleration acting on the molten aluminum around a cooled object about the cooled object becomes 0.01-1,500 m/s² while introducing gas bubbles into the molten aluminum to thereby cause upward movement of the gas bubbles to the solidification boundary face by the reaction force of the centrifugal acceleration acting on the molten aluminum to abrade the solidification boundary face and the vicinity thereof while moving upwards.
Patent Document 1: Japanese Examined Laid-opened Patent Publication No. 61-3385
Patent Document 1: Japanese Patent No. 3,674,322

### DISCLOSURE OF THE INVENTION

### PROBLEMS TO BE SOLVED BY THE INVENTION

In these conventional technologies, however, impurities in the obtained aluminum have not been removed sufficiently, and the productivity and workability remain bothersome.

In detail, according to the technologies described in Patent Document 1 and Patent Document 2, when the temperature of the cooled object is lower than the melting point of the aluminum at the time of immersing the cooled object into the molten aluminum, aluminum starts to crystallize on the outer peripheral surface of the cooled object before rotating the cooled object. Thereafter, even if the aluminum is solidified and grown, the crystal crystallized at a portion near the outer peripheral surface of the cooled object becomes high in impurity concentration. This portion could be a factor increasing the impurity concentration in the entire crystallized aluminum, resulting in insufficient purification efficiency.

Furthermore, when a cooled object low in peripheral surface temperature is immersed in the molten aluminum as mentioned above, the solidification rate at the vicinity of the cooled object becomes high. The aluminum crystallized with the high solidification rate is poor in adhesiveness to the cooled object, resulting in very easy detachment by the centrifugal force of the rotation. Detachment after the purification conducted for a certain period of time causes less collection amount of purified aluminum, or detachment or deformation of the mass may cause splash or swash of molten alloy, causing problems with workability.

These problems similarly occur not only in aluminum but also in other metal or a substance other than metal which allows purification utilizing a principle of segregation/solidification method.

The present invention was made in view of the aforementioned background, and aims to provide a substance purification method and a substance purification apparatus high in purification efficiency, excellent in adhesiveness to a cooled object, and capable of preventing detachment due to a centrifugal force caused by the rotation of the cooled object and obtaining a larger collection amount of purified substance.

### MEANS FOR SOLVING PROBLEMS

The aforementioned objects can be solved by the following means.
[1] A method for purifying a substance, comprising the features of claim 1.
[2] The method of purifying a substance as recited in the aforementioned Item 1, wherein the peripheral speed of the cooled object is set to 1,500 mm/s or higher but lower than 6,000 mm/s.
[3] The method of purifying a substance as recited in the aforementioned Items 1 or 2, wherein when the cooled object is pulled out of the molten substance after crystallizing the substance and growing the crystal on the surface of the cooled object, the cooled object is pulled out of the molten substance while rotating with a peripheral speed of the cooled object at a boundary face of a crystallized portion on the cooled object with the molten substance set to 700 mm/s or higher but lower than 8,000 mm/s.
[4] The method of purifying a substance as recited in the aforementioned Item 3, wherein the cooled object is rotated so that the peripheral speed of the cooled object at the boundary face of the crystallized portion on the cooled object with the molten substance is set to 1,500 mm/s or higher but lower than 7,000 mm/s.
[5] The method of purifying a substance as recited in any one of the aforementioned Items 1 to 4, wherein the temperature of the cooled object is set to [(solidus temperature of the substance) x 0.8] or higher.
[6] The method of purifying a substance as recited in any one of the aforementioned Items 1 to 4, wherein the temperature of the cooled object is set to [(solidus temperature of the substance) x 0.9] or higher.
[7] The method of purifying a substance as recited in any one of the aforementioned Items 1 to 6, wherein a maximum peripheral speed of the cooled object at an early stage of purification after the immersion is faster than a subsequent average peripheral speed of the cooled object.
[8] The method of purifying a substance as recited in the aforementioned Item 7, wherein the maximum peripheral speed of the cooled object at an early stage of purification after the immersion is [(subsequent average peripheral speed) x 1.1] or higher.
[9] The method of purifying a substance as recited in the aforementioned Item 7 or 8, wherein the early stage of purification is defined as a period of time from a start of the purification to [(entire purification time) x 0.1], but 10 seconds or more and 120 seconds or less.
[10] The method of purifying a substance as recited in any one of the aforementioned Items 1 to 9, wherein the substance is metal.
[11] The method of purifying a substance as recited in the aforementioned Item 10, wherein the metal is aluminum.
[12] An apparatus for purifying a substance, comprising the features of claim 12.
[13] The apparatus for purifying a substance as recited in the aforementioned Item 12, wherein the temperature of the cooled object is set to [(solidus temperature of the substance) x 0.8] or higher.
[14] The apparatus for purifying a substance as recited in the aforementioned Item 12, wherein the temperature of the cooled object is set to [(solidus temperature of the substance) x 0.9] or higher.
[15] The apparatus for purifying a substance as recited in the aforementioned Item 12, further comprising a controller for controlling a rotation speed of the cooled object so that a maximum peripheral speed of the cooled object at an early stage of purification is faster than a subsequent average peripheral speed.
[16] The apparatus for purifying a substance as recited in the aforementioned Item 15, wherein the controller controls the rotational speed of the cooled object so that the maximum peripheral speed of the cooled object at the early stage of purification is set to [(subsequent average peripheral speed) x 1.1] or higher.
[17] The apparatus for purifying a substance as recited in the aforementioned Items 15 or 16, wherein the early stage of purification is defined as a period of time from a start of purification to [(entire purification time) x 0.1.

### EFFECTS OF THE INVENTION

According to the present invention as recited in the aforementioned Item [1], since the cooled object having a temperature of [(solidus temperature of the substance) x 0.7] or higher is immersed into the molten substance while rotating the cooled object at a peripheral speed of 700 mm/s or higher, a high-purity crystal excellent in adhesiveness to the cooled object can be crystallized at the early stage of the purification, preventing detachment from the cooled object, which makes it possible to increase the collection amount of the purified substance. Furthermore, since the cooled object is rotated at a peripheral speed of lower than 8,000 mm/s, it is possible to prevent occurrence of operation problems, such as, e.g., splashing of molten substance.

According to the present invention as recited in the aforementioned Item [2], a more highly purified substance can be obtained while further preventing splashing of molten substance.

According to the present invention as recited in the aforementioned Item [3], it is possible to prevent deterioration of the purification efficiency caused by adherence of a molten substance higher in impurity concentration on a surface of the crystallized crystal portion.

According to the present invention as recited in the aforementioned Item [4], it is possible to more effectively prevent adherence of a molten substance higher in impurity concentration on a surface of the crystallized crystal portion.

According to the present invention as recited in the aforementioned Item [5], the solidification rate of the molten substance can be further reduced, further enhancing the adhesiveness to the cooled object, which prevents detachment to further increase the collection amount of the purified substance.

According to the present invention as recited in the aforementioned Item [6], the solidification rate of the molten substance can be further reduced, further enhancing the adhesiveness to the cooled object, which prevents detachment to further increase the collection amount of the purified substance.

According to the present invention as recited in the aforementioned Item [7], since the purification is performed with the maximum peripheral speed of the cooled object at an early stage of purification set to be higher than the subsequent average peripheral speed, at the early stage of purification when the cooled object is immersed into the molten substance to be purified, even if a crystallized substance high in solidification rate and poor in adhesiveness is obtained by the purification, the crystallized substance can be positively detached from the rotating cooled object and resolved in the molten substance. Thus, the crystallized substance poor in adhesiveness to the cooled object can be removed at the very early stage, which prevents the crystallized substance from being detached from the cooled object after being grown to some extent in a state in which the solidification rate is high. This enables the purified substance after the positive detachment to be grown without causing detachment, resulting in increased collection amount of the purified substance.

According to the present invention as recited in the aforementioned Item [8], the early stage positive detachment effects of the crystallized substance high in solidification rate and poor in adhesiveness to the cooled object can be exerted effectively.

According to the present invention as recited in the aforementioned Item [9], stable improvement of the purification efficiency can be expected.

According to the present invention as recited in the aforementioned Item [10], a high-purity metal crystal excellent in adhesiveness to the cooled object can be crystallized at the early stage of the purification, preventing detachment from the cooled object, which in turn can increase the collection amount of the purified metal.

According to the present invention as recited in the aforementioned Item [11], high-purity aluminum excellent in adhesiveness to the cooled object can be crystallized, preventing detachment from the cooled object, which in turn can increase the collection amount of the purified aluminum.

According to the present invention as recited in the aforementioned Item [12], a high-purity crystal excellent in adhesiveness to the cooled object can be crystallized at the early stage of purification, preventing detachment from the cooled object, which in turn can provide a purification device capable of increasing the collection amount of the purified substance.

According to the present invention as recited in the aforementioned Item [13], the solidification rate of the molten substance can be further reduce, further enhancing the adhesiveness to the cooled object, which in turn can provide a purification device capable of further increasing the collection amount of the purified substance by preventing detachment.

According to the present invention as recited in the aforementioned Item [14], the solidification rate of the molten substance can be further reduce, further enhancing the adhesiveness to the cooled object, which in turn can provide a purification device capable of further increasing the collection amount of the purified substance by preventing detachment.

According to the present invention as recited in the aforementioned Item [15], the purification is performed with the maximum peripheral speed of the cooled object at an early stage of purification set to be higher than the subsequent average peripheral speed, which can provide a purification device capable of positively detaching a crystallized substance high in solidification rate and poor in adhesiveness to the cooled object at the early stage of the purification.

According to the present invention as recited in the aforementioned Item [16], it is possible to provide a purification device capable of positively detaching a crystallized substance high in solidification rate and poor in adhesiveness to the cooled object at the early stage of the purification.

According to the present invention as recited in the aforementioned Item [17], it is possible to provide a purification device capable of stably improving the purification efficiency.

### BRIEF DESCRIPTION OF DRAWINGS

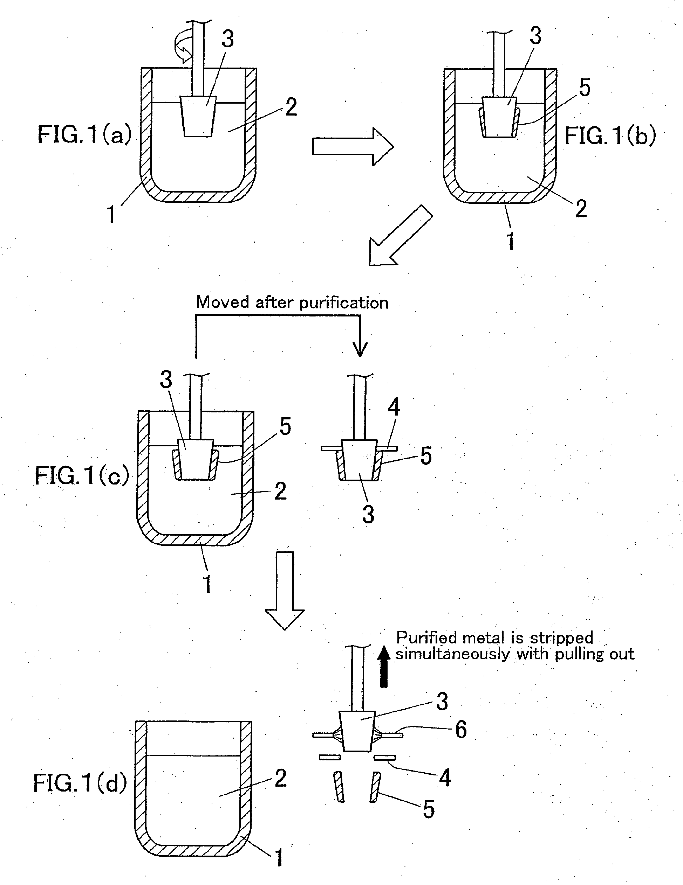

[Fig. 1] Fig. 1 is an explanatory view for explaining a schematic structure of a purification device and a metal purification method according to an embodiment of the present invention.

### DESCRIPTION OF THE REFERENCE NUMERALS

1: Molten metal accommodating furnace
2: Molten aluminum (molten metal)
3: Cooled object
5: Purified aluminum
6: Heating device

### BEST MODE FOR CARRYING OUT THE INVENTION

Hereinafter, an embodiment of the present invention will be explained.

Fig. 1 is an explanatory view for explaining a schematic structure of a purification device and a metal purification method according to an embodiment of the present invention.

In Fig. 1, "1" denotes a molten metal accommodating furnace, and molten aluminum (hereinafter may also be referred to as "molten metal") is accommodated inside of the molten metal accommodating furnace 1. A rotatable cooled object 3 is arranged above the accommodating furnace 1 in a manner such that it is rotatable and movable up and down and right and left by a rotation driving device and a moving device. At the time of purifying aluminum, the cooled object 3 is moved downward while rotating to be immersed into molten aluminum 2 in the molten metal accommodating furnace 1. In stead of downwardly moving the cooled object 3, the molten metal accommodating furnace 1 can be upwardly moved to thereby immerse the cooled object 3 into the molten aluminum 2.

Furthermore, a cooling fluid is supplied to the inside of the cooled object 3 so that the cooled object 3 is cooled from the inside thereof during the aluminum purification.

Furthermore, as shown in Fig. 1(c), a purified metal stripping device 4 is arranged in parallel to the molten metal accommodating furnace 1.

Furthermore, although not illustrated, the molten metal 2 in the molten metal accommodating furnace 1 is disposed in a heating furnace so as to keep a constant temperature and headed from the outside of the accommodating furnace 1. As shown in Fig. 1(a), the rotating cooled object 3 is immersed in the molten metal 2 in the molten metal accommodating furnace 1 while rotating, and the rotation of the cooled object is continued while supplying cooling fluid to the inside of the cooled object. As a result, a crystal of aluminum, i.e., purified aluminum 5, is gradually crystallized on the peripheral surface of the cooled object 1 as shown in Fig. 1(b).

In immersing the rotating cooled object 3 in the molten aluminum 2 accommodated in the accommodating furnace 1, by immersing the cooled object 3 in the molten aluminum while rotating as mentioned above, the outer peripheral surface of the cooled object and the molten aluminum assuredly cause relative movement, and therefore sufficiently purified aluminum will be crystallized on the outer peripheral surface of the cooled object 3.

In this case, the peripheral speed of the cooled object 3 when the cooled object 3 is immersed in the molten aluminum 2 should fall within the range of 700 mm/s or higher but lower than 8, 000 mm/s, preferably 1,500 mm/s or higher but lower than 6,000 mm/s. The peripheral speed mentioned here denotes a moving speed of the outer peripheral surface of the cooled object 3 itself, and has no relation to the moving speed of the molten aluminum 2.

Here, the aforementioned "when the cooled object 3 is immersed" is defined as a period of time from when the lower end of the cooled object 3 contacts the molten metal to when the cooled object 3 is immersed to the maximum depth. In other words, during the time from when the lower end of the cooled object 3 contacts the molten metal 2 to when the cooled object 3 is immersed to a predetermined depth, it is necessary to maintain the peripheral speed of the outer peripheral surface of the cooled object 3 to 700 mm/s or higher but lower than 8,000 mm/s. If the peripheral speed is 700 mm/s or lower, the impurity concentration in the aluminum crystallized in the vicinity of the outer peripheral surface of the cooled object 3 becomes high. As a result, the impurity concentration in the crystallized aluminum becomes high. Although it is preferable that the peripheral speed of the outer peripheral surface of the cooled object 3 is as faster as possible in order to obtain a high-purity mass, if it is 8,000 mm/s or higher, the peripheral speed is too fast, causing splashing of the molten surface of the molten metal at the time of immersing the cooled object 3. This causes operation problems.

The configuration of the cooled object 3 is not specifically limited, and can be a cylindrical shape with a constant outer diameter, an inverted truncated cone shape (tapered shape) with a diameter continuously decreased to the lower end, or any other shape. However, at all portions of the cooled object 3 to be immersed in the molten metal, it is necessary to maintain the peripheral speed of the outer peripheral surface to 700 mm/s or higher but lower than 8,000 m/s.

When the cooled object 3 is immersed, the temperature of the cooled object 3 is set to [(solidus temperature of the aluminum) x 0.7] or higher, i.e., 470 °C or higher. If necessary, the cooled object 3 is heated with a heating device such as a heater. If the temperature of the cooled object 3 is lower than the [(solidus temperature of the aluminum) x 0.7], the solidification speed of the molten aluminum becomes too fast, resulting in poor adhesiveness to the cooled object 3, which causes very easy detachment by the centrifugal force due to the rotation. As a result, the purified metal collection amount decreases. The preferable temperature of the cooled object 3 at the time of immersing in the molten aluminum is [(solidus temperature of the aluminum) x 0.8] or higher, more preferably [(solidus temperature of the aluminum) x 0.9] or higher.

Rotation of the cooled object 3 immersed in the molten metal causes crystallization of aluminum on the outer peripheral surface of the cooled object 3. After the crystallization of a certain amount of aluminum, if the cooled object 3 is pulled out of the molten aluminum in a state in which the rotation of the cooled object 3 is stopped, the following problems will occur. That is, the relative movement at the boundary face between the aluminum crystallized on the cooled object 3 and the molten metal stops. Therefore, even if the supply of the cooling medium for cooling the cooled object 3 is stopped, aluminum with high impurity, concentration is crystallized on the surface of the purified aluminum 5 crystallized before the stop after the rotation stop of the cooled object 3 until completion of the pulling out, and that molten aluminum with higher impurity concentration is adhered to the surface of the aluminum. This may cause deterioration of purification efficiency.

In this embodiment, it is preferable to keep the state in which the relative movement is always maintained at the boundary face between the surface of the crystallized purified aluminum 5 and the molten aluminum. With this, the impurity concentration in the crystallized purified aluminum 5 can be lowered, and the molten aluminum becomes hard to adhere to the surface of the purified aluminum 2, which in turn can prevent increasing of the impurity concentration in the entire purified aluminum 5.

From this point of view, it is preferable that the peripheral speed of the cooled object 3 at the time of pulling out of the molten aluminum 2 is as fast as possible. Concretely, it is preferable that the peripheral speed of the purified aluminum 5 adhered to (crystallized on) the cooled object 3 at the boundary of the molten aluminum 2 is set to 700 mm/s or higher. If the peripheral speed is lower than 700 mm/s, aluminum with high impurity concentration is crystallized on the surface of the purified aluminum 5. As a result, there is a possibility that the impurity concentration of the entire aluminum becomes high. It is more preferable that the peripheral speed is set to 1,500 mm/s or higher.

On the other hand, if the peripheral speed of the purified aluminum 5 adhered to (crystallized on) the cooled object 3 at the boundary of the molten aluminum 2 is set to 8,000 mm/s or higher when the cooled object 3 is pulled out, the centrifugal force becomes too large. This may cause splashing of the molten aluminum 2 adhered to the surface of the purified aluminum 5 above the liquid surface. Preferably, it is set to be 7,000 mm/s or lower.

Here, the aforementioned "when the cooled object 3 is pulled out" means a period of time from when the uppermost portion of the purified aluminum 5 crystallized on the cooled object 3 is pulled out of the molten metal 2 to when the lowermost end of the purified aluminum 5 is detached from the molten metal 2. In other words, it is preferable to maintain the peripheral speed of the purified aluminum 6 at the boundary face with the molten metal 2 to 700 mm/s or higher but lower than 8,000 mm/s from when the uppermost portion of the purified aluminum 5 is pulled out of the molten metal to when the lowermost end of the purified aluminum 5 is detached from the molten metal.

Furthermore, in this embodiment, it is preferable to detach a mass weak in adhesiveness to the rotating cooled object in a short period of time at the early stage of purification by intentionally increasing the peripheral speed of the cooled object 3 at the early stage of the purification to thereby increase the centrifugal force. In other words, during the purification early stage from the immediately after the immersion of the cooled object 3, it is preferable to perform the purification with the maximum peripheral speed of the cooled object 3 set to be higher than the average peripheral speed of the cooled object 3 after passing the purification initial stage. Specifically, it is preferable that the maximum peripheral speed of the cooled object at the purification early stage is set to be 1.1 times or more of the average peripheral speed of the cooled object 3 after passing the purification early stage. If it is less than 1.1 times, sufficient centrifugal force cannot be obtained, which may cause insufficient detachment of purified aluminum weak in adhesiveness to the cooled object 3.

The purification early stage is defined by a period of time from the purification start to [entire purification time x 0.1]. The time should be within the range of 10 to 120 seconds. Here, the purification start is defined by the time when the cooled object 3 is immersed in the molten aluminum 2 to a prescribed depth. If the peripheral speed of the cooled object 3 is increased after exceeding the [entire purification time x 0.1], or after exceeding 120 seconds from the purification start, the detaching timing # of the purified aluminum 5 becomes too late, causing a decreased collection amount of the purified aluminum 5 in a certain period of time, and therefore it is not preferable. If the time for increasing the peripheral speed of the cooled object 3 is less than 10 seconds from the purification start, sufficient detachment of the purified aluminum 5 weak in adhesiveness to the cooled object 3 cannot be attained, and therefore it is not preferable.

From the rotatable cooled object 3 pulled out of the molten metal 2, the purified aluminum 5 crystallized on the peripheral surface of the cooled object is stripped with a stripping device 4 as shown in Fig. 1(d). Thereafter, the cooled object 3 is moved to the accommodating furnace 1 to perform subsequent purification.

By repeating the step of: immersing the rotatable cooled object 3 → crystallization of the purified aluminum → pulling the purified aluminum together with the rotatable cooled object 3 → collecting the purified aluminum by stripping, the purification is continuously performed.

The aforementioned explanation is directed to purification of aluminum, but the target can be another metal other than aluminum, such as, e.g., silicon or magnesium, or any substance which can be purified utilizing a principle of segregation/solidification method to obtain the high-purity mass thereof. Even in the case of purifying a substance other than aluminum, the temperature of the cooled object 3 at the time of immersing into the molten substance can be set to [(solidus temperature of the substance) x 0.7] or higher. The numerals explained used in the aluminum purification can also be applied to conditions and the like on the peripheral speed of the cooled object 3.

### EXAMPLES

Using molten aluminum containing mainly Fe: 490-510 ppm and Si: 390-410 ppm as impurities, the following tests were performed.

### (EXAMPLE 1)

Molten aluminum of the aforementioned composition was accommodated in the purifying accommodation furnace and the temperature was held at 665 °C by regulating a purification furnace heater. Thereafter, while rotating a rotatable cooled object of a tapered shape having an outer diameter of the upper end portion: 150 mm and an outer diameter of the lower end portion: 100 mm, and a length: 200 mm, wherein the temperature was regulated to 470 °C ([(solidus temperature of aluminum) x 0.7]), the cooled object was immersed in the molten aluminum to the position of 170 mm above from the lowermost end portion of the cooled object. The peripheral speed of the outer peripheral surface of the lowermost end portion of the immersed portion of the cooled object at the time of the immersion was set to 2,100 mm/s.

While rotating the cooled object at the peripheral speed of 2,100 mm/s, crystallization of purified aluminum on the peripheral surface of the rotating cooled object was performed for 7 minutes.

Thereafter, the cooled object was pulled out of the molten aluminum while rotating. The peripheral speed of the surface of the lowermost end portion of the purified aluminum crystallized on the cooled object when pulled out was set to 2,100 mm/s, and the rotation speed was maintained until the lower end portion of the cooled object was completely pulled out of the molten aluminum. The rotating cooled object was cooled by supplying compressed air.

### (EXAMPLE 2)

Purification was performed under the same conditions as in Example 1 except that the cooled object was pulled out of the molten aluminum with the rotation of the cooled object stopped.

The weight of the aluminum purified mass crystallized on the cooled object, Fe and Si concentrations and purification efficient after the purification are shown in Table 1.

### (EXAMPLE 3)

Purification was performed under the same conditions as in Example 1 except that the peripheral speed of the outer peripheral surface of the lowermost end portion of the immersed portion of the cooled object at the time of immersing in the molten metal was set to 1,000 mm/s and that the cooled object was pulled out of the molten aluminum with the rotation of the cooled object stopped.

The weight of the aluminum purified mass crystallized on the cooled object, Fe and Si concentrations and purification efficient after the purification are shown in Table 1.

### (EXAMPLE 4)

Purification was performed under the same conditions as in Example 1 except that the cooled object was pulled out of the molten aluminum with the peripheral speed of the lowermost end portion of the purified aluminum crystallized on the cooled object at the boundary face with the molten metal set to 1,000 mm/s.

The weight of the aluminum purified mass crystallized on the cooled object, Fe and Si concentrations and purification efficient after the purification are shown in Table 1.

### (EXAMPLE 5)

Purification was performed under the same conditions as in Example 1 except that the temperature of the cooled object at the time of immersing in the molten aluminum was set to 530 °C [(solidus temperature of the aluminum) x 0.8].

The weight of the aluminum purified mass crystallized on the cooled object, Fe and Si concentrations and purification efficient after the purification are shown in Table 1.

### (EXAMPLE 6)

Purification was performed under the same conditions as in Example 1 except that the temperature of the cooled object at the time of immersing in the molten aluminum was set to 600 °C [(solidus temperature of the aluminum) x 0.9].

The weight of the aluminum purified mass crystallized on the cooled object, Fe and Si concentrations and purification efficient after the purification are shown in Table 1.

### (COMPARATIVE EXAMPLE 1)

Purification was performed under the same conditions as in Example 1 except that the cooled object was immersed in the molten aluminum without rotating the cooled object and pulled out of the molten aluminum with the rotation of the cooled object stopped.

The weight of the aluminum purified mass crystallized on the cooled object, Fe and Si concentrations and purification efficient after the purification are shown in Table 1.

### (COMPARATIVE EXAMPLE 2)

Purification was performed under the same conditions as in Comparative Example 1 except that the peripheral speed of the outer peripheral surface of the lowermost end portion of the immersed portion of the cooled object at the time of immersing in the molten metal was set to 350 mm/s

The weight of the aluminum purified mass crystallized on the cooled object, Fe and Si concentrations and purification efficient after the purification are shown in Table 1.

### (COMPARATIVE EXAMPLE 3)

Purification was performed under the same conditions as in Comparative Example 1 except that the cooled object was pulled out of the molten aluminum with the peripheral speed of the lowermost end portion of the purified aluminum crystallized on the cooled object at the boundary face with the molten metal set to 350 mm/s.

The weight of the aluminum purified mass crystallized on the cooled object, Fe and Si concentrations and purification efficient after the purification are shown in Table 1.

### (COMPARATIVE EXAMPLE 4)

Purification was performed under the same conditions as in Example 1 except that the temperature of the cooled object at the time of immersing in the molten aluminum was set to 300 °C

The weight of the aluminum purified mass crystallized on the cooled object, Fe and Si concentrations and purification efficient after the purification are shown in Table 1.

About each of Examples 1-6 and Comparative Examples 1-4, the weight of the purified aluminum (aluminum purified mass) crystallized on the cooled object pulled out of the molten metal, Fe and Si concentrations and purification efficiency after the purification were measured. The results are shown in Table 1.

As shown in Table 1, it is understood that, as compared with the comparative example products, the example products of the present invention are low in impurity concentration and good in purification efficiency

### (EXAMPLE 7)

Under the conditions in Example 1, purification tests were performed five times. As a result, the weight of the purified mass was 6.08 kg on average. Further, the number of times of detachment occurred during the purifications was investigated as time advances from the initiation of the purification. The results are shown in Table 2. After the (entire purification time x 0.1) from the initiation of the purification, detachment occurred two times, resulting in lower weight of purified mass than in Examples 8 and 9.

### (EXAMPLE 8)

Purification tests were performed five times by setting the peripheral speed of the outer peripheral surface of the uppermost end portion of the immersed portion of the cooled object to 3,500 mm/s and the subsequent peripheral speed set to 3,000 mm/s from the initiation of the purification to the (entire purification time x 0.05) under the conditions of Example 1. As a result, the weight of the purified mass was 6.12 kg on average. Further, the number of times of detachment occurred during the purification was investigated as time advances from the initiation of the purification. The results are shown in Table 3. The most detachment occurred within the (entire purification time x 0.1) from the initiation of the purification, but detachment occurred once (Test Number 4) among five occurrences within the (entire purification time x 0.1) to the (entire purification time x 0.15) from the initiation of the purification.

### (EXAMPLE 9)

Purification tests were performed five times by setting the peripheral speed of the outer peripheral surface of the uppermost end portion of the immersed portion of the cooled object to 3,500 mm/s and the subsequent peripheral speed set to 3,000 mm/s from the initiation of the purification to the (entire purification time x 0.1) under the conditions of Example 1. As a result, the weight of the purified mass was 6.14 kg on average. Further, the number of times of detachment occurred during the purification was investigated as time advances from the initiation of the purification. No detachment occurred after the (entire purification time x 0.1) from the initiation of the purification, and therefore the weight of the purified mass increased as compared with Examples 7 and 8.

**[Table 1]**

| | Purified mass weight (Kg) | Cooled object peripheral speed when immersing (mm/s) | Cooled object peripheral speed when purifying (mm/s) | Purified AL peripheral speed when pulling out (mm/s) | Cooled object temperature when immersing (°C) | Initial impurity concentration | | Aluminum purified mass impurity concentration | | Purification efficiency | |
|---|---|---|---|---|---|---|---|---|---|---|---|
| | | | | | | Fe (ppm) | Si (ppm) | Fe (ppm) | Si (ppm) | Fe | Si |
| Comp. Ex. 1 | 6.0 | 0 | 2,100 | 0 | 470 [(solidus temperature of the substance) x 0.7] | 510 | 407 | 116 | 137 | 0.228 | 0.336 |
| Ex. 1 | 6.1 | 2,100 | 2,100 | 2,100 | 470 [(solidus temperature of the substance) x 0.7] | 499 | 397 | 95 | 111 | 0.190 | 0.280 |
| Ex. 2 | 6.0 | 2,100 | 2,100 | 0 | 470 [(solidus temperature of the substance) x 0.7] | 505 | 401 | 106 | 124 | 0.209 | 0.308 |
| Ex. 3 | 6.1 | 1,000 | 2,100 | 0 | 470 [(solidus temperature of the substance) x 0.7] | 504 | 400 | 108 | 126 | 0.215 | 0.316 |
| Ex. 4 | 6.0 | 2,100 | 2,100 | 1,000 | 470 [(solidus temperature of the substance) x 0.7] | 494 | 396 | 97 | 114 | 0.196 | 0.288 |
| Ex. 5 | 6.2 | 2,100 | 2;100 | 2,100 | 530 [(solidus temperature of the substance) x 0.8] | 497 | 395 | 92 | 108 | 0.186 | 0.274 |
| Ex. 6 | 6.3 | 2,100 | 2,100 | 2,100 | 600 [(solidus temperature of the substance) x 0.9] | 500 | 401 | 91 | 107 | 0.182 | 0.268 |
| Comp. Ex. 2 | 6.0 | 350 | 2,100 | 0 | 470 [(solidus temperature of the substance) x 0:7] | 507 | 401 | 112 | 131 | 0.221 | 0.327 |
| Comp. Ex. 3 | 6.1 | 0 | 2,100 | 350 | 470 [(solidus temperature of the substance) x 0.7] | 503 | 399 | 113 | 132 | 0.224 | 0.330 |
| Comp. Ex. 4 | 5.9 | 2,100 | 2,100 | 2,100 | 300 | 495 | 395 | 107 | 125 | 0.216 | 0.317 |

**[Table 2]**

| Example 7 | | | | | | |
|---|---|---|---|---|---|---|
| Test Number | Mass weight | Number of detachment from purification start to (entire purification time x 0.05) | Number of detachment from (entire purification time x 0.05) to (entire purification time x 0.1) | Number of detachment from (entire purification time x 0.1) to (entire purification time x 0.15) | Number of detachment after (entire purification time x 0.15) | Number of detachment (Total) |
| 1 | 5.9 | 1 | 0 | 1 | 0 | 2 |
| 2 | 6.3 | 1 | 0 | 0 | 0 | 1 |
| 3 | 5.8 | 1 | 0 | 0 | 1 | 2 |
| 4 | 6.1 | 1 | 1 | 0 | 0 | 2 |
| 5 | 6.3 | 1 | 0 | 0 | 0 | 1 |

**[Table 3]**

| Example 8 | | | | | | |
|---|---|---|---|---|---|---|
| Test Number | Mass weight | Number of detachment from purification start to (entire purification time x 0.05) | Number of detachment from (entire purification time x 0.05) to (entire purification time x 0.1) | Number of detachment from (entire purification time x 0.1) to (entire purification time x 0.15) | Number of detachment after (entire purification time x 0.15) | Number of detachment (Total) |
| 1 | 6.1 | 1 | 1 | 0 | 0 | 2 |
| 2 | 6.2 | 1 | 1 | 0 | 0 | 2 |
| 3 | 6.2 | 1 | 1 | 0 | 0 | 2 |
| 4 | 5.9 | 1 | 0 | 1 | 0 | 2 |
| 5 | 6.2 | 1 | 1 | 0 | 0 | 2 |

**[Table 4]**

| Example 9 | | | | | | |
|---|---|---|---|---|---|---|
| Test Number | Mass weight | Number of detachment from purification start to (entire purification time x 0.05) | Number of detachment from (entire purification time x 0.05) to (entire purification time x 0.1) | Number of detachment from (entire purification time x 0.1) to (entire purification time x 0.15) | Number of detachment after (entire purification time x 0.15) | Number of detachment (Total) |
| 1 | 6.1 | 1 | 1 | 0 | 0 | 2 |
| 2 | 6:2 | 1 | 1 | 0 | 0 | 2 |
| 3 | 6.1 | 1 | 1 | 0 | 0 | 2 |
| 4 | 6.2 | 1 | 1 | 0 | 0 | 2 |
| 5 | 6.1 | 1 | 1 | 0 | 0 | 2 |

This application claims priority to Japanese Patent Application No. 2007-32891 filed on December 20, 2007, and the entire disclosure of which is incorporated herein by reference in its entirety.

It should be understood that the terms and expressions used herein are used for explanation and have no intention to be used to construe in a limited manner, do not eliminate any equivalents of features shown and mentioned herein, and allow various modifications falling within the claimed scope of the present invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive.

### INDUSTRIAL APPLICABILITY

The substance purification method and substance purification device of this invention are preferably used to purify a substance such as metal to obtain a high-purity substance.

## Claims

1. A method for purifying a substance, comprising immersing a cooled object (3) in a molten substance (2) to crystallize the substance on a surface of the cooled object to obtain a crystal of the substance and grow the crystal, wherein during a time from when a lower end of the cooled object (3) contacts the molten substance to when the cooled object (3) is immersed to a maximum depth
the cooled object (3) is rotated at a peripheral speed of 700 mm/s or higher but lower than 8,000 mm/s and a temperature of the cooled object (3) is set to [(solidus temperature of the substance) x 0.7] or higher.

2. The method of purifying a substance as recited in claim 1, wherein the peripheral speed of the cooled object (3) is set to 1,500 mm/s or higher but lower than 6,000 mm/s.

3. The method of purifying a substance as recited in claims 1 or 2, wherein when the cooled object (3) is pulled out of the molten substance after crystallizing the substance and growing the crystal on the surface of the cooled object, the cooled object is pulled out of the molten substance while rotating with a peripheral speed of the cooled object at a boundary face of a crystallized portion on the cooled object with the molten substance set to 700 mm/s or higher but lower than 8,000 mm/s.

4. The method of purifying a substance as recited in claim 3, wherein the cooled object (3) is rotated so that the peripheral speed of the cooled object at the boundary face of the crystallized portion on the cooled object with the molten substance is set to 1,500 mm/s or higher but lower than 7,000 mm/s.

5. The method of purifying a substance as recited in any one of claims 1 to 4, wherein the temperature of the cooled object (3) is set to [(solidus temperature of the substance) x 0.8] or higher.

6. The method of purifying a substance as recited in any one of claims 1 to 4, wherein the temperature of the cooled object (3) is set to [(solidus temperature of the substance) x 0.9] or higher.

7. The method of purifying a substance as recited in any one of claims 1 to 6, wherein a maximum peripheral speed of the cooled object (3) at an early stage of purification after the immersion is faster than a subsequent average peripheral speed of the cooled object.

8. The method of purifying a substance as recited in claim 7, wherein the maximum peripheral speed of the cooled object at an early stage of purification after the immersion is [(subsequent average peripheral speed) x 1.1] or higher.

9. The method of purifying a substance as recited in claim 7 or 8, wherein the early stage of purification is defined as a period of time from a start of the purification to [(entire purification time) x 0.1], but 10 seconds or more and 120 seconds or less.

10. The method of purifying a substance as recited in any one of claims 1 to 9, wherein the substance is metal.

11. The method of purifying a substance as recited in claim 10, wherein the metal is aluminum.

12. An apparatus for purifying a substance, comprising a furnace (1) body arranged to accommodate a substance to be purified in a molten state, and a rotatable cooled object (3) to be immersed in a molten substance (2) accommodated in the furnace body, the apparatus being configured to,
during a time from when a lower end of the cooled object (3) contacts the molten substance to when the cooled object (3) is immersed to a maximum depth: set a peripheral speed of the cooled object (3) to 700 mm/s or higher but lower than 8,000 mm/s, and
immerse the cooled object (3) in the molten substance (2) in a state in which a temperature of the cooled object (3) is set to [(solidus temperature of the substance) x 0.7] or higher.

13. The apparatus for purifying a substance as recited in claim 12, wherein the temperature of the cooled object (3) is set to [(solidus temperature of the substance) x 0.8] or higher.

14. The apparatus for purifying a substance as recited in claim 12, wherein the temperature of the cooled object (3) is set to [(solidus temperature of the substance) x 0.9] or higher.

15. The apparatus for purifying a substance as recited in claim 12, further comprising a controller for controlling a rotation speed of the cooled object (3) so that a maximum peripheral speed of the cooled object at an early stage of purification is faster than a subsequent average peripheral speed.

16. The apparatus for purifying a substance as recited in claim 15, wherein the controller controls the rotational speed of the cooled object (3) so that the maximum peripheral speed of the cooled object at the early stage of purification is set to [(subsequent average peripheral speed) x 1.1] or higher.

17. The apparatus for purifying a substance as recited in claims 15 or 16, wherein the early stage of purification is defined as a period of time from the start of purification to [(entire purification time) x 0.1.

## Patentansprüche

1. Ein Verfahren zum Reinigen einer Substanz, aufweisend
Eintauchen eines gekühlten Objekts (3) in eine geschmolzene Substanz (2), um die Substanz auf einer Oberfläche des gekühlten Objektes zu kristallisieren, um einen Kristall der Substanz zu erhalten und den Kristall zu züchten,
wobei während einer Zeit von dem Zeitpunkt, wenn ein unteres Ende des gekühlten Objekts (3) die geschmolzene Substanz kontaktiert, bis zum Zeitpunkt, wenn das gekühlte Objekt (3) auf eine maximale Tiefe eingetaucht ist, das gekühlte Objekt (3) mit einer Umfangsgeschwindigkeit von 700 mm/s oder höher, aber niedriger als 8000 mm/s gedreht wird und eine Temperatur des gekühlten Objekts (3) gesetzt wird auf [(Solidustemperatur der Substanz) x 0,7] oder höher.

2. Das Verfahren zum Reinigen einer Substanz wie in Anspruch 1 dargelegt, wobei die Umfangsgeschwindigkeit des gekühlten Objekts (3) auf 1500 mm/s oder höher, aber niedriger als 6000 mm/s gesetzt wird.

3. Das Verfahren zum Reinigen einer Substanz wie in den Ansprüchen 1 oder 2 dargelegt, wobei, wenn das gekühlte Objekt (3) nach dem Kristallisieren der Substanz und dem Züchten des Kristalls auf der Oberfläche des gekühlten Objekts aus der geschmolzenen Substanz gezogen wird, das gekühlte Objekt aus der geschmolzenen Substanz gezogen wird, während es mit einer auf 700 mm/s oder höher, aber niedriger als 8000 mm/s gesetzten Umfangsgeschwindigkeit des gekühlten Objekts an einer Grenzfläche eines kristallisierten Abschnittes auf dem gekühlten Objekt mit der geschmolzenen Substanz gedreht wird.

4. Das Verfahren zum Reinigen einer Substanz wie in Anspruch 3 dargelegt, wobei das gekühlte Objekt (3) gedreht wird, so dass die Umfangsgeschwindigkeit des gekühlten Objekts an der Grenzfläche des kristallisierten Abschnitts auf dem gekühlten Objekt mit der geschmolzenen Substanz auf 1500 mm/s oder höher, aber niedriger als 7000 mm/s gesetzt wird.

5. Das Verfahren zum Reinigen einer Substanz wie in einem beliebigen der Ansprüche 1 bis 4 dargelegt, wobei die Temperatur des gekühlten Objekts (3) gesetzt wird auf [(Solidustemperatur der Substanz) x 0,8] oder höher.

6. Das Verfahren zum Reinigen einer Substanz wie in einem beliebigen der Ansprüche 1 bis 4 dargelegt, wobei die Temperatur des gekühlten Objekts (3) gesetzt wird auf [(Solidustemperatur der Substanz) x 0,9] oder höher.

7. Das Verfahren zum Reinigen einer Substanz wie in einem beliebigen der Ansprüche 1 bis 6 dargelegt, wobei eine maximale Umfangsgeschwindigkeit des gekühlten Objekts (3) in einer frühen Phase der Reinigung nach dem Eintauchen schneller ist als eine nachfolgende durchschnittliche Umfangsgeschwindigkeit des gekühlten Objekts.

8. Das Verfahren zum Reinigen einer Substanz wie in Anspruch 7 dargelegt, wobei die maximale Umfangsgeschwindigkeit des gekühlten Objekts (3) in einer frühen Phase der Reinigung nach dem Eintauchen [(nachfolgende durchschnittliche Umfangsgeschwindigkeit) x 1,1] ist oder höher.

9. Das Verfahren zum Reinigen einer Substanz wie in Anspruch 7 oder 8 dargelegt, wobei die frühe Phase der Reinigung definiert ist als eine Zeitperiode vom Start der Reinigung bis [(Gesamtreinigungszeit) x 0,1], jedoch 10 Sekunden oder länger und 120 Sekunden oder kürzer.

10. Das Verfahren zum Reinigen einer Substanz wie in einem beliebigen der Ansprüche 1 bis 9 dargelegt, wobei die Substanz Metall ist.

11. Das Verfahren zum Reinigen einer Substanz wie in Anspruch 10 dargelegt, wobei das Metall Aluminium ist.

12. Eine Vorrichtung zum Reinigen einer Substanz, aufweisend
einen Ofenkörper (1), der angeordnet ist, um eine zu reinigende Substanz in einem geschmolzenen Zustand aufzunehmen, und ein drehbares gekühltes Objekt (3), das in eine im Ofenkörper aufgenommene geschmolzene Substanz (2) einzutauchen ist, wobei die Vorrichtung so eingerichtet ist, dass sie während einer Zeit von einem Zeitpunkt, wenn ein unteres Ende des gekühlten Objekts (3) die geschmolzene Substanz kontaktiert, bis zum Zeitpunkt, wenn das gekühlte Objekt (3) auf eine maximale Tiefe eingetaucht ist, eine Umfangsgeschwindigkeit des gekühlten Objekts (3) auf 700 mm/s oder höher, aber niedriger als 8000 mm/s setzt und das gekühlte Objekt (3) in die geschmolzene Substanz (2) eintaucht in einem Zustand, in dem eine Temperatur des gekühlten Objekts (3) gesetzt ist auf [(Solidustemperatur der Substanz) x 0,7 oder höher.

13. Die Vorrichtung zum Reinigen einer Substanz wie in Anspruch 12 dargelegt, wobei die Temperatur des gekühlten Objekts (3) gesetzt ist auf [(Solidustemperatur der Substanz) x 0,8] oder höher.

14. Die Vorrichtung zum Reinigen einer Substanz wie in Anspruch 12 dargelegt, wobei die Temperatur des gekühlten Objekts (3) gesetzt ist auf [(Solidustemperatur der Substanz) x 0, 9] oder höher.

15. Die Vorrichtung zum Reinigen einer Substanz wie in Anspruch 12 dargelegt, ferner aufweisend
eine Steuervorrichtung zum Steuern einer Drehzahl des gekühlten Objekts (3), so dass eine maximale Umfangsgeschwindigkeit des gekühlten Objekts in einer frühen Phase der Reinigung schneller ist als eine nachfolgende durchschnittliche Umfangsgeschwindigkeit.

16. Die Vorrichtung zum Reinigen einer Substanz wie in Anspruch 15 dargelegt, wobei die Steuervorrichtung die Drehzahl des gekühlten Objekts (3) steuert, so dass die maximale Umfangsgeschwindigkeit des gekühlten Objekts in der frühen Phase der Reinigung gesetzt ist auf [(nachfolgende durchschnittliche Umfangsgeschwindigkeit) x 1,1] oder höher.

17. Die Vorrichtung zum Reinigen einer Substanz wie in den Ansprüchen 15 oder 16 dargelegt, wobei die frühe Phase der Reinigung definiert ist als eine Zeitperiode vom Start der Reinigung bis [(Gesamtreinigungszeit) x 0,1].

## Revendications

1. Procédé de purification d'une substance, comprenant l'immersion d'un objet refroidi (3) dans une substance fondue (2) pour cristalliser la substance sur une surface de l'objet refroidi pour obtenir un cristal de la substance et assurer la croissance du cristal,
dans lequel pendant un temps allant du moment où une extrémité inférieure de l'objet refroidi (3) entre en contact avec la substance fondue jusqu'au moment où l'objet refroidi (3) est immergé à une profondeur maximale, l'objet refroidi (3) est mis en rotation à une vitesse périphérique de 700 mm/s ou plus mais inférieure à 8 000 mm/s et une température de l'objet refroidi (3) est définie à [(température solide de la substance) x 0,7] ou plus.

2. Procédé de purification d'une substance selon la revendication 1, dans lequel la vitesse périphérique de l'objet refroidi (3) est définie à 1 500 mm/s ou plus, mais à moins de 6 000 mm/s.

3. Procédé de purification d'une substance selon les revendications 1 ou 2, dans lequel l'objet refroidi (3) est retiré de la substance fondue après cristallisation de la substance et croissance du cristal sur la surface de l'objet refroidi, l'objet refroidi est retiré de la substance fondue tout en étant en rotation à une vitesse périphérique de l'objet refroidi au niveau d'une face dé délimitation d'une partie cristallisée sur l'objet refroidi avec la substance fondue définie à 700 mm/s ou plus, mais à moins de 8 000 mm/s.

4. Procédé de purification d'une substance selon la revendication 3, dans lequel l'objet refroidi (3) est mis en rotation de telle sorte que la vitesse périphérique de l'objet refroidi au niveau de la face de délimitation de la partie cristallisée sur l'objet refroidi avec la substance fondue soit définie à 1 500 mm/s ou plus, mais à moins de 7 000 mm/s.

5. Procédé de purification d'une substance selon l'une quelconque des revendications 1 à 4, dans lequel la température de l'objet refroidi (3) est définie à [(température solide de la substance) x 0,8] ou plus.

6. Procédé de purification d'une substance selon l'une quelconque des revendications 1 à 4, dans lequel la température de l'objet refroidi (3) est définie à [(température solide de la substance) x 0,9] ou plus.

7. Procédé de purification d'une substance selon l'une quelconque des revendications 1 à 6, dans lequel une vitesse périphérique maximale de l'objet refroidi (3) à un stade précoce de purification après l'immersion est plus rapide qu'une vitesse périphérique moyenne ultérieure de l'objet refroidi.

8. Procédé de purification d'une substance selon la revendication 7, dans lequel la vitesse périphérique maximale de l'objet refroidi (3) à un stade précoce de purification après l'immersion est [(vitesse périphérique moyenne ultérieure) x 1,1] ou plus.

9. Procédé de purification d'une substance selon les revendications 7 ou 8, dans lequel le stade précoce de purification est défini comme une période de temps allant d'un début de la purification jusqu'à un [(temps de purification complète) x 0,1], mais de 10 secondes ou plus et 120 secondes ou moins.

10. Procédé de purification d'une substance selon l'une quelconque des revendications 1 à 9, dans lequel la substance est du métal.

11. Procédé de purification d'une substance selon la revendication 10, dans lequel le métal est de l'aluminium.

12. Appareil de purification d'une substance, comprenant un corps de four (1) conçu de sorte à loger une substance devant être purifiée dans un état fondu, et un objet refroidi rotatif (3) destiné à être immergé dans une substance fondue (2) logée dans le corps de four, l'appareil étant configuré, pendant un temps allant du moment où une extrémité inférieure de l'objet refroidi (3) entre en contact avec la substance fondue jusqu'au moment où l'objet refroidi (3) est immergé à une profondeur maximale, pour :
définir une vitesse périphérique de l'objet refroidi (3) à 700 mm/s ou plus, mais à moins de 8 000 mm/s, et
immerger l'objet refroidi (3) dans la substance fondue (2) dans un état dans lequel une température de l'objet refroidi (3) est définie à [(température solide de la substance) x 0,7] ou plus.

13. Appareil pour purifier une substance selon la revendication 12, dans lequel la température de l'objet refroidi (3) est définie à [(température solide de la substance) x 0,8] ou plus.

14. Appareil pour purifier une substance selon la revendication 12, dans lequel la température de l'objet refroidi (3) est définie à [(température solide de la substance) x 0,9] ou plus.

15. Appareil pour purifier une substance selon la revendication 12, comprenant en outre un contrôleur pour contrôler une vitesse de rotation de l'objet refroidi (3) de telle sorte qu'une vitesse périphérique maximale de l'objet refroidi à un stade précoce de purification soit plus rapide qu'une vitesse périphérique moyenne ultérieure.

16. Appareil pour purifier une substance selon la revendication 15, dans lequel le contrôleur contrôle la vitesse de rotation de l'objet refroidi (3) de telle sorte que la vitesse périphérique maximale de l'objet refroidi à un stade précoce de purification soit définie à [(vitesse périphérique moyenne ultérieure) x 1,1] ou plus.

17. Appareil pour purifier une substance selon les revendications 15 ou 16, dans lequel le stade précoce de purification est défini comme une période de temps allant du début de la purification jusqu'au [(temps de purification complète) x 0,1].
